# EUROPEAN PATENT APPLICATION

(11) **EP 4 274 003 A1**
(43) Date of publication of application: **08.11.2023**
(21) Application number: 22209564.8
(22) Date of filing: 25.11.2022
(51) Int. Cl.: H01M 10/655, H01M 10/6551, H01M 50/242, H01M 50/249, H01M 50/296, H01M 50/30, H01M 50/342, H01M 50/367, H01M 50/204

(54) **BATTERY PACK AND VEHICLE**

(30) Priority: 06.05.2022 CN 202210489640; 22.07.2022 CN 202210873440
(71) Applicant: CALB Co., Ltd., Changzhou City, Jiangsu Province (CN)
(72) Inventor: WANG, Shuaifeng, Changzhou City, Jiangsu Province (CN); YANG, Xulong, Changzhou City, Jiangsu Province (CN); JIANG, Xinwei, Changzhou City, Jiangsu Province (CN)
(74) Representative: Becker, Eberhard

(57) **Abstract**

A battery pack and a vehicle are provided. The battery pack includes a battery box (10) and the battery (20). The battery box (10) includes a main body (11) and a top cover (12), the main body (11) includes an opening (111) facing upward, and the top cover (12) is connected to the main body (11) to cover the opening (111). The battery (20) is arranged in the battery box (10), and the battery (20) includes a battery body (21), a pressure relief structure (22) and a terminal assembly (23). The pressure relief structure (22) and the terminal assembly (23) are located on a same side of the battery body (21), and are both disposed toward the bottom surface (112) of the main body (11) opposite to the opening (111).

## Description

### BACKGROUND

### Technical Field

The present disclosure relates to the technical field of batteries, and in particular, to a battery pack and a vehicle.

### Description of Related Art

In the related art, a battery pack may include a plurality of batteries, and the batteries may be arranged in a battery box. When the battery pack is used for a long time, thermal runaway is likely to occur to the battery pack, which might cause safety issues.

### SUMMARY

The present disclosure provides a battery pack and a vehicle.

In a first aspect of the present disclosure, a battery pack is provided. The battery includes a battery box and a battery. The battery box includes a main body and a top cover, the main body includes an opening facing upward, and the top cover is connected to the main body to block the opening. The battery is arranged in the battery box, and the battery includes a battery body, a pressure relief structure and a terminal assembly, the pressure relief structure and the terminal assembly are located on a same side of the battery body and are disposed toward the bottom surface of the main body opposite to the opening.

In a second aspect of the present disclosure, a vehicle is provided. The vehicle includes a passenger compartment and the above-mentioned battery pack, and the opening of the battery pack faces the passenger compartment.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural view of a battery pack according to a first exemplary embodiment.
FIG. 2 is a schematic structural view of a battery pack according to a second exemplary embodiment.
FIG. 3 is a schematic structural view of a battery pack according to a third exemplary embodiment.
FIG. 4 is a schematic structural view of a battery pack according to a fourth exemplary embodiment.
FIG. 5 is a partial structural view of a battery pack according to an exemplary embodiment.
FIG. 6 is a schematic structural view of a battery pack according to a fifth exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

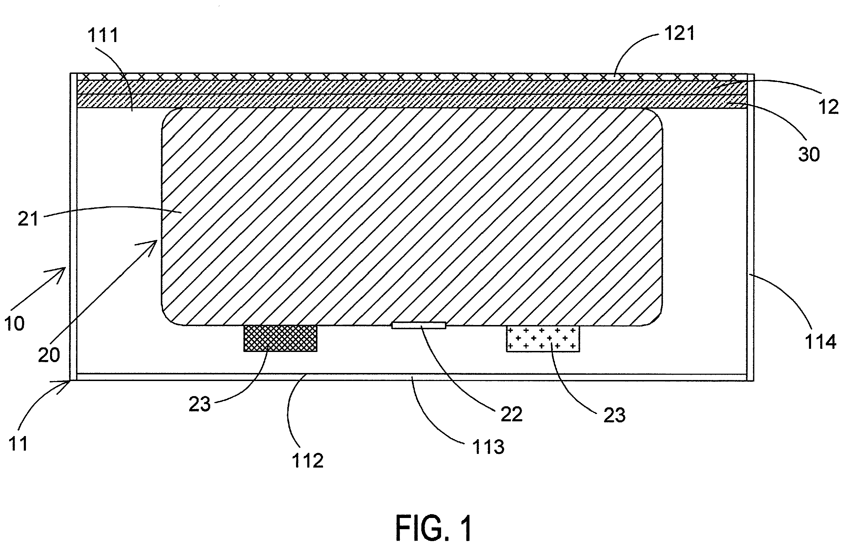

An embodiment of the present disclosure provides a battery pack, please refer to FIG. 1 to FIG. 5. The battery pack includes a battery box 10 and a battery 20. The battery box 10 includes a main body 11 and a top cover 12, the main body 11 includes an opening 111 facing upward, and the top cover 12 is connected to the main body 11 to cover the opening 111. The battery 20 is arranged in the battery box 10, and the battery 20 includes a battery body 21, a pressure relief structure 22 and a terminal assembly 23. The pressure relief structure 22 and the terminal assembly 23 are located on the same side of the battery body 21, and are both disposed toward a bottom surface 112 of the main body 11 opposite to the opening 111.

The battery pack of an embodiment of the present disclosure includes a battery box 10 and a battery 20, and the battery 20 is arranged in the battery box 10. The battery box 10 includes a main body 11 and a top cover 12, the top cover 12 is connected to the opening 111 of the main body 11 for blocking the main body 11. The pressure relief structure 22 and the terminal assembly 23 of the battery 20 are located on the same side of the battery body 21, and are both disposed toward the bottom surface 112 of the main body 11 opposite to the opening 111, such that it is possible to prevent the gas discharged from the pressure relief structure 22 from being ejected directly toward the top cover 12, thereby to some extent avoiding the thermal runaway from occurring to the battery 20 and preventing safety problems. At present, in order to improve the energy density of batteries, cathode materials with high nickel content are selected in most cases. In ternary materials, such as nickel-cobalt-manganese materials, the nickel content accounts for more than 60 wt%, which is normally called high-nickel materials. While the energy density is improved, the heat of thermal runaway of a battery using high nickel materials can be as high as 1000°C or higher, which is greater than the melting point of the current common materials, such as aluminum and steel, adopted for the top cover 12. Therefore, the gas caused by thermal runaway will burn through the top cover 12 and directly affect the passenger compartment, thereby causing great safety hazards. The above design may avoid the impact on the passenger compartment to a large extent when thermal runaway occurs, and protect the safety of passengers. Typically, the terminal assembly 23 is connected with a bus bar to realize the electrical connection between the batteries 20. However, in order to ensure the safety performance of the battery pack, a certain electrical gap is normally left between the battery box 10 and the bus bar. By arranging both the pressure relief structure 22 and the terminal assembly 23 to face the bottom surface 112, while ensuring a certain gap between the battery body 21 and the bottom surface 112, the pressure relief structure 22 and the terminal assembly 23 may make reasonable use of the gap, thereby increasing the space utilization of the battery box 10. In the meantime, one side of the battery body 21 facing the top cover 12 may be in direct contact with the top cover 12, or other structures may be arranged between the battery body 21 and the top cover 12, so as to further improve the space utilization of the battery box 10, thereby improving the use performance of the battery pack.

It should be noted that, the top cover 12 is connected to the opening 111 of the main body 11 for blocking the main body 11, and the pressure relief structure 22 and the terminal assembly 23 of the battery 20 are both disposed toward the bottom surface 112 of the main body 11 opposite to the opening 111, that is, when thermal runaway occurs to the battery 20, the pressure relief structure 22 is destroyed, so that the gas inside the battery 20 is ejected. Under the circumstances, the ejected gas may be directly sprayed to the bottom surface 112, and when the gas flows to the top cover 12, both heat and pressure will be decreased to a certain extent, at this time, the damage caused by the gas to the top cover 12 will be reduced. The opening 111 of the main body 11 is arranged toward the passenger compartment of the vehicle, such that it is possible to prevent the gas ejected from the pressure relief structure 22 from being directly ejected into the passenger compartment, thereby improving the safety performance of the vehicle.

The bottom of the main body 11 of the battery pack must meet the ball impact standard, that is, the bottom portion of the main body 11 having the bottom surface 112 needs to meet the ball impact standard. Under the circumstances, there is a gap left between the battery 20 and the bottom portion of the main body 11, that is, the gap is left between the battery 20 and the bottom plate 113 to ensure anti-collision and buffering. When the terminal assembly 23 faces the bottom surface 112, this gap may perfectly serve as a safety gap between the terminal assembly 23 and the battery box 10, so that the space of the battery box 10 is reasonably utilized, and the space utilization of the battery box 10 is improved.

Since there is no terminal assembly 23 and pressure relief structure 22 between the top cover 12 and the battery body 21, there may be no gap between the top cover 12 and the battery body 21. For example, the top cover 12 and the battery body 21 are in direct contact, so that the height of the battery box 10 may be appropriately reduced. Alternatively, a gap may be formed in advance between the top cover 12 and the battery body 21. For example, a heat conducting structure may be provided between the top cover 12 and the battery body 21, so that the heat of the battery 20 can be transferred to the top cover 12 to dissipate heat quickly, so as to improve the heat dissipation efficiency of the battery 20. As such, it is possible to improve the safety performance of the battery pack, while the space utilization of the battery box 10 may be improved.

The battery 20 includes a cell and an electrolyte, which is the minimum unit capable of performing electrochemical reactions such as charging/discharging. The cell refers to a unit formed by winding or laminating a stack portion, and the stack portion includes a first electrode, a separator and a second electrode. When the first electrode is a positive electrode, the second electrode is a negative electrode, and the polarities of the first electrode and the second electrode are interchangeable.

It should be noted that the pressure relief structure 22 of the battery 20 may be a pressure relief structure in the related art, such as an explosion-proof film, an explosion-proof valve and other structures, the disclosure is not limited thereto.

In an embodiment, as shown in FIG. 1 to FIG. 4, the main body 11 further includes a bottom plate 113 and a frame 114. The bottom plate 113 has a bottom surface 112. The frame 114 is arranged around the bottom plate 113, and an opening 111 is formed at one end of the frame 114 away from the bottom plate 113. The top cover 12 is connected to the frame 114. The pressure relief structure 22 and the bottom plate 113 are arranged at intervals, and the terminal assembly 23 and the bottom plate 113 are arranged at intervals. As such, the pressure relief structure 22 may be destroyed when thermal runaway occurs to the battery 20, so as to ensure that the gas inside the battery 20 can be effectively discharged to avoid safety problems, and a certain safety distance may be established between the terminal assembly 23 and the bottom plate 113.

A plurality of batteries 20 may be arranged inside the battery box 10, and the plurality of batteries 20 may be connected in series or in parallel through a bus bar, for example, the terminal assemblies 23 of two adjacent batteries are connected through a bus bar. The battery 20 may include two terminal assemblies 23, which are respectively a positive terminal assembly and a negative terminal assembly. Since the terminal assembly 23 faces the bottom surface 112 of the battery box 10, the bus bar may be arranged between the battery 20 and the bottom surface 112, or the bus bar may be arranged on the lateral side of the battery 20, which is not limited in the disclosure, as long as it is ensured that the bus bar can realize the serial connection or parallel connection of the battery 20.

It should be noted that the arrangement of the frame 114 surrounding the bottom plate 113 does not refer to a specific configuration, and the emphasis lies in that the frame 114 forms a circumferentially closed space. The frame 114 is connected to the bottom plate 113, the frame 114 may be disposed on the bottom plate 113, or the frame 114 may be connected to the circumferential edge of the bottom plate 113, which is not limited in the disclosure. The frame 114 may enclose an independent large space, and the plurality of batteries 20 are arranged in this space, or at least one partition beam may also be arranged in the frame 114 to divide the space into at least two independent spaces, and the independent spaces are respectively used for placing corresponding batteries 20.

In an embodiment, the top cover 12 seals the opening 111, so as to ensure the sealing performance inside the battery box 10 and prevent external dust and other substances from entering the battery box 10 and affecting the structure of the battery 20.

The top cover 12 may be connected to the frame 114 to seal the opening 111 of the frame 114. The bottom plate 113 and the top cover 12 are arranged opposite to each other and are respectively connected to two opposite ends of the frame 114, so as to effectively seal the frame 114. In this way, the gas generated by thermal runaway may be avoided to the greatest extent from overflowing from the top cover 12, so as to protect the passengers in the passenger compartment and improve the safety performance of the battery pack.

In some embodiments, it is not excluded that the battery box 10 may be provided with an exhaust channel. For example, the frame 114 may be provided with a through hole, and a pressure relief portion may be provided inside the through hole. When the air pressure inside the battery box 10 reaches a certain level, the pressure relief portion may be destroyed, so that the gas inside the battery box 10 may be discharged in time, so as to avoid safety problems. The pressure relief portion may be an explosion-proof valve, and the pressure relief portion may also be a structure with relatively low strength, such as a thin aluminum plate, wherein when the pressure reaches a certain level, the thin aluminum is broken through.

In an embodiment, the top cover 12 includes a heat exchange channel, so that the top cover 12 may be used for heating or cooling the battery 20. The heat exchange channel may be a fluid heat exchange channel, and the heat exchange channel may also be a gas exchange channel, for cooling or heating the battery 20 inside the battery box 10.

The top cover 12 includes a heat exchange channel, that is, a heat exchange channel may be integrated on the top cover 12. Further, it may be regarded that a heat exchange structure is used as the top cover 12 of the battery box 10, so as to realize the heating or cooling of the battery 20. As such, it is possible to omit the addition of a heat exchange structure to heat or cool the battery 20, thereby reducing the weight of the battery pack.

In an embodiment, the top cover 12 is in contact with the battery 20 so that the heating or cooling of the battery 20 may be efficiently achieved. Since the top portion of the battery 20 is substantially flat, the contact area between the top cover 12 and the battery 20 may be increased, thereby improving the heat transfer efficiency.

The top cover 12 may be in direct contact with the battery 20, that is, the top cover 12 is attached to the battery 20. Under the circumstances, the heat exchange channel may be used to rapidly heat or cool the battery 20.

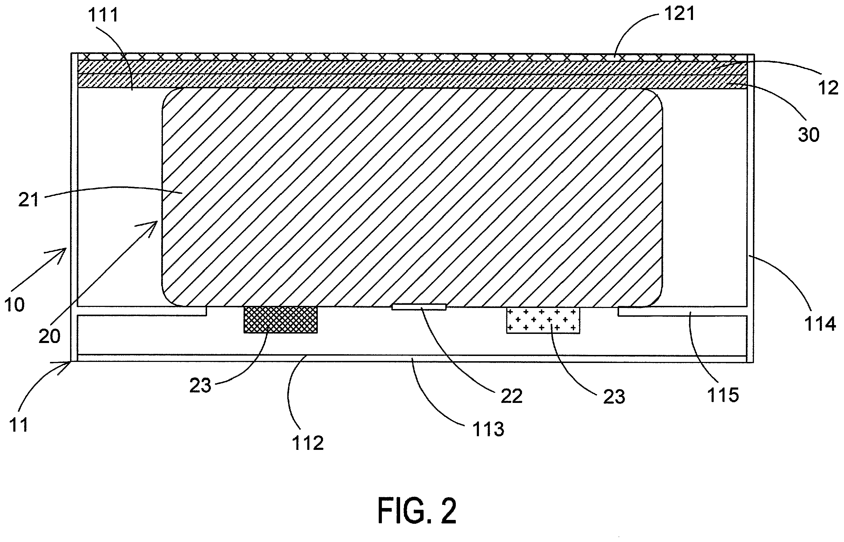

In an embodiment, the top cover 12 and the battery 20 may be in indirect contact. As shown in FIG. 1 and FIG. 2, the battery pack further includes a heat conducting portion 30, and the heat conducting portion 30 is located between the top cover 12 and the battery 20, so that the top cover 12 is in contact with the battery 20 through the heat conducting portion 30, and that the heat transfer between the top cover 12 and the battery 20 may be realized through the heat conducting portion 30.

The heat conducting portion 30 may be a thermally conductive material in the related art. For example, the heat conducting portion 30 may include a graphene sheet, a thermally conductive silicone sheet, a thermally conductive silicone grease, etc., which is not limited in the disclosure.

In an embodiment, the heat conducting portion 30 between the top cover 12 and the battery 20 may be a thermally conductive adhesive, which not only achieves heat transfer between the top cover 12 and the battery 20, but also achieves reliable connection between the top cover 12 and the battery 20, so as to improve the stable performance of the battery 20. The heat conducting portion 30 may be thermally conductive structural adhesive, and the top cover 12 and the battery 20 are bonded through the thermally conductive structural adhesive, which not only ensure the strength of the connection, but also the thermally conductive structural adhesive can realize heat transfer, thereby improving the heat dissipation capability of the battery 20.

In an embodiment, the top cover 12 is fixedly connected to the battery 20, not only can the top cover 12 be fixed to the battery 20, but also the top cover 12 may be used for heating or heat dissipation of the battery 20. The top cover 12 may be fixedly connected to the battery 20 through thermally conductive structural adhesive. Alternatively, the top cover 12 may be fixedly connected to the battery 20 through an engaging structure.

In an embodiment, as shown in FIG. 1 and FIG. 2, one side of the top cover 12 away from the battery 20 is provided with a thermal insulating layer 121, so as to ensure that the internal temperature of the battery box 10 is kept at a certain level, thereby avoiding the impact on the use performance of the battery pack when the ambient temperature is too low. When the ambient temperature is relatively high, since the top cover 12 has a heat exchange channel, the battery 20 may also be cooled reliably.

The thermal insulating layer 121 may be thermal insulation cotton, which can not only perform a thermal insulation function, but also achieves a certain supporting effect. The thermal insulating layer 121 may be a coating, for example, directly coating or spraying thermal insulating material on the top cover 12 to form the thermal insulating layer 121. As such, not only can the thermal insulation effect be achieved, but also space may be saved. The specific material of the thermal insulating layer 121 is not limited in the disclosure, and may be selected according to actual needs.

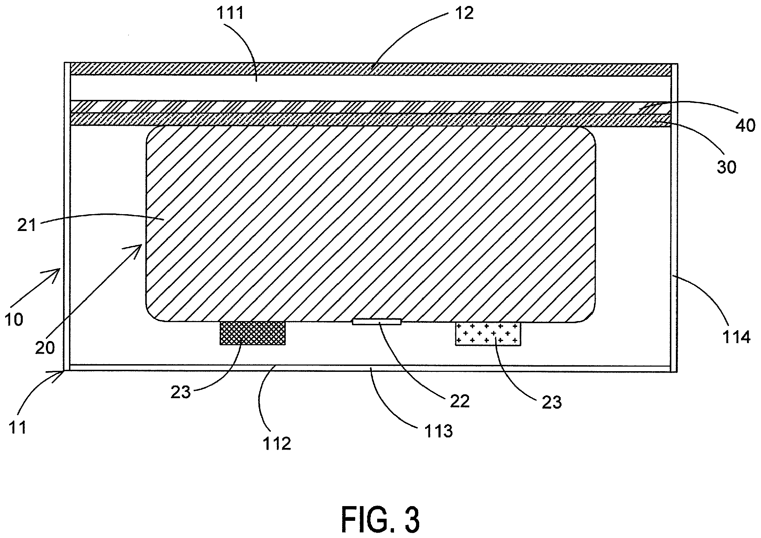

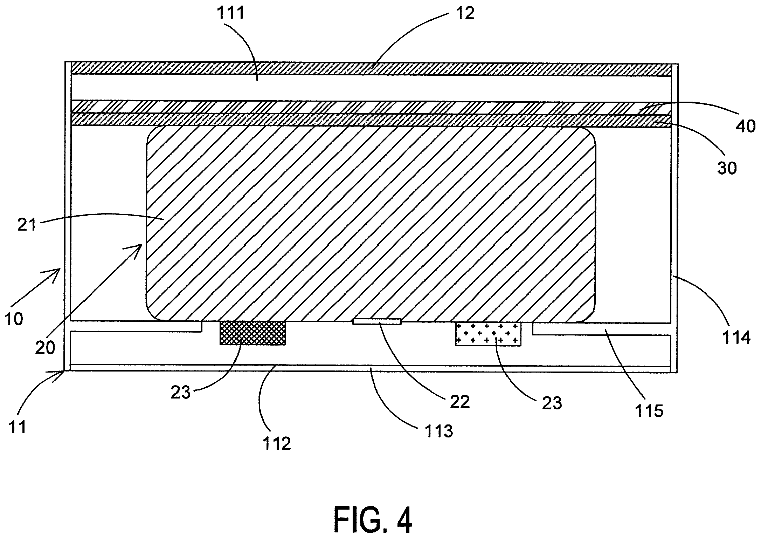

In an embodiment, as shown in FIG. 3 and FIG. 4, the battery pack further includes a temperature adjustment plate 40. The temperature adjustment plate 40 is located between the top cover 12 and the battery 20, and the temperature adjustment plate 40 is used to heat or cool the battery 20 rapidly.

The temperature adjustment plate 40 may be a heat exchange structure in the related art, for example, the temperature adjustment plate 40 may be a liquid cooling plate. The temperature adjustment plate 40 includes a heat exchange channel. Compared with the embodiments shown in FIG. 1 and FIG. 2, the temperature adjustment plate 40 in this embodiment may be regarded to be the same structure as the top cover 12 in FIG. 1 and FIG. 2. The top cover 12 in this embodiment may serve sealing and protection functions for the battery box 10.

In an embodiment, the temperature adjustment plate 40 is in contact with the battery 20, so that the heating or cooling of the battery 20 may be efficiently achieved.

The temperature adjustment plate 40 may be in direct contact with the battery 20, that is, the temperature adjustment plate 40 is attached to the battery 20. Under the circumstances, the temperature adjustment plate 40 may be used to rapidly heat or cool the battery 20.

In an embodiment, the temperature adjustment plate 40 and the battery 20 may be in indirect contact. As shown in FIG. 3 and FIG. 4, the battery pack further includes a heat conducting portion 30, and the heat conducting portion 30 is located between the temperature adjustment plate 40 and the battery 20, so that the temperature adjustment plate 40 is in contact with the battery 20 through the heat conducting portion 30, and that the heat transfer between the temperature adjustment plate 40 and the battery 20 may be realized through the heat conducting portion 30.

The heat conducting portion 30 may be a thermally conductive material in the related art. For example, the heat conducting portion 30 may include a graphene sheet, a thermally conductive silicone sheet, a thermally conductive silicone grease, etc., which is not limited in the disclosure.

In an embodiment, the heat conducting portion 30 between the temperature adjustment plate 40 and the battery 20 may be a thermally conductive adhesive, which not only achieves heat transfer between the temperature adjustment plate 40 and the battery 20, but also achieves reliable connection between the temperature adjustment plate 40 and the battery 20, so as to improve the stable performance of the battery 20. The heat conducting portion 30 may be thermally conductive structural adhesive, and the temperature adjustment plate 40 and the battery 20 are bonded through the thermally conductive structural adhesive, which can not only ensure the strength of the connection, but also the thermally conductive structural adhesive can realize heat transfer, thereby improving the heat dissipation capability of the battery 20.

In an embodiment, the temperature adjustment plate 40 and the top cover 12 may be spaced apart, and a thermal insulating structure may be disposed between the temperature adjustment plate 40 and the top cover 12. For example, a thermal insulating cotton may be provided between the temperature adjustment plate 40 and the top cover 12. The thermal insulating cotton may serve thermal insulation and supporting functions. The temperature adjustment plate 40 and the top cover 12 may also be in direct contact, so as to improve the space utilization of the battery box 10.

In an embodiment, the temperature adjustment plate 40 is fixedly connected to the battery 20, not only can the temperature adjustment plate 40 be fixed to the battery 20, but also the temperature adjustment plate 40 may be used for heating or heat dissipation of the battery 20. The temperature adjustment plate 40 may be fixedly connected to the battery 20 by means of a thermally conductive structural adhesive. Alternatively, the temperature adjustment plate 40 may be fixedly connected to the battery 20 through an engaging structure.

In an embodiment, as shown in FIG. 2 and FIG. 4, the inner side of the main body 11 is provided with a support portion 115, and one side of the battery body 21 provided with the pressure relief structure 22 and the terminal assembly 23 is provided on the support portion 115. The support portion 115 not only serves as the reliable support for the battery 20, but also ensures the pressure relief distance between the pressure relief structure 22 and the bottom surface 112, and ensures the safety distance between the terminal assembly 23 and the bottom surface 112, thereby improving the safety performance of the battery 20.

The support portion 115 extends from the inner side of the frame 114, so that there is a certain gap between the support portion 115 and the bottom plate 113. Under the circumstances, one side of the battery body 21 provided with the pressure relief structure 22 and the terminal assembly 23 is disposed on the support portion 115. On the premise of supporting the battery body 21, the support portion 115 may ensure that the configuration positions of the pressure relief structure 22 and the terminal assembly 23 are exclusive relative to each other, so as to avoid contact between the pressure relief structure 22 as well as the terminal assembly 23 and the bottom surface 112.

The battery body 21 may be bonded to the support portion 115, for example, the battery body 21 and the support portion 115 are connected through a thermally conductive structural adhesive. Alternatively, the battery body 21 may be engaged with the support portion 115. Alternatively, a buffer material may be disposed between the battery body 21 and the support portion 115, so as to avoid hard contact between the battery body 21 and the support portion 115.

In an embodiment, the support portion 115 may be integrally formed with at least a portion of the main body 11.

In an embodiment, the battery 20 may be disposed on the bottom plate 113. Under the circumstances, the battery body 21 and the bottom plate 113 may be connected through other structures. For example, the battery body 21 and the bottom plate 113 may be connected through a thermally conductive structural adhesive. However, it should be ensured that there is a gap between the pressure relief structure 22 and the bottom surface 112, so as to ensure that the pressure relief structure 22 can be damaged. The battery body 21 and the bottom plate 113 may be connected through a positioning structure, which is not limited in the disclosure.

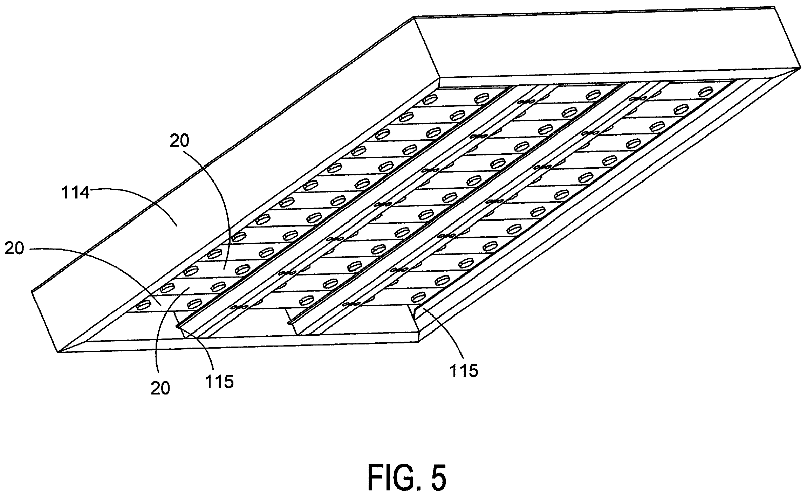

In an embodiment, as shown in FIG. 5, a plurality of batteries 20 may be fixed within the battery box 10.

A plurality of batteries 20 may be formed into a battery module and then fixed in the battery box 10, and the plurality of batteries 20 may be fixed through the end plate and the lateral plate to form a battery module, which is finally disposed in the battery box 10. A plurality of batteries 20 may be independently fixed in the battery box 10, that is, there is no need to group a plurality of batteries 20, and under the circumstances, the end plate and the lateral plate may be removed.

In an embodiment, a separation structure 13 is disposed in the main body 11 to form a battery accommodating space 14 and an exhaust space 15. The battery 20 is disposed inside the battery accommodating space 14, and gas inside the battery accommodating space 14 can enter the exhaust space 15. Further, gas discharged from the battery 20 can be collected into the exhaust space 15 through the separation structure 13 and be discharged. The battery accommodating space 14 is configured for placement of the battery 20, and the exhaust space 15 is configured to discharge the gas in time, such that the safe use performance of the battery pack is ensured.

When the gas pressure in the battery accommodating space 14 reaches a certain value, the gas in the battery accommodating space 14 can enter the exhaust space 15, that is, the battery accommodating space 14 and the exhaust space 15 communicate with each other, in this way, the separation structure 13 realize the communication of the battery accommodating space 14 and the exhaust space 15. In normal conditions, the separation structure 13 realizes the isolation of the battery accommodating space 14 and the exhaust space 15.

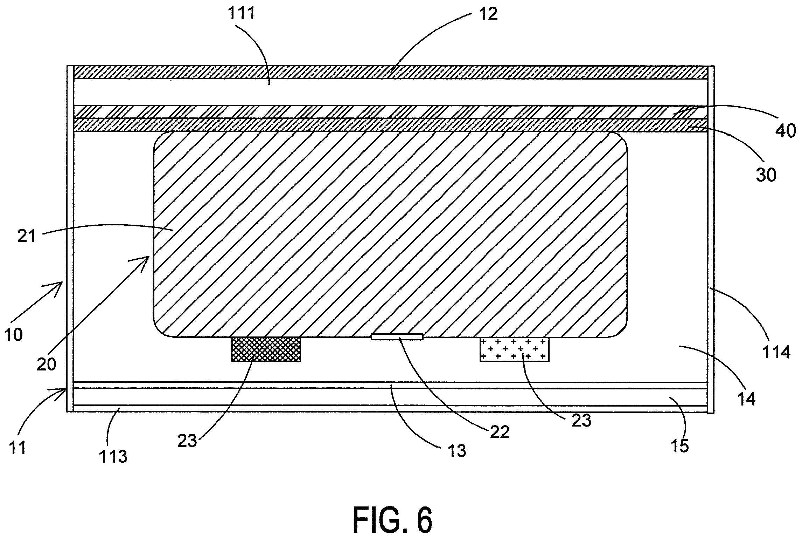

In an embodiment, as shown in FIG. 6, the upper and lower sides of the separation structure 13 respectively form the battery accommodating space 14 and the exhaust space 15.

In some embodiments, left and right sides of the separation structure 13 form the battery accommodating space 14 and the exhaust space 15. At this time, the exhaust space can be disposed around the battery accommodating space 14, that is, the exhaust space 15 surrounds the peripheries of the battery accommodating space 14. Or, the exhaust space 15 can be merely a part of a periphery of the battery accommodating space 14, for example, the battery accommodating space 14 can be a rectangular space, at this time, the exhaust space 15 can be located on at least one side of the four outer peripheries of the rectangular space, such that the gas in the battery accommodating space 14 can enter the exhaust space 15 from a side portion thereof, so as to realize pressure relief through the exhaust space 15.

In an embodiment, as shown in FIG. 6, the pressure relief structure 22 and the terminal assembly 23 are both disposed towards the separation structure 13, that is, the battery accommodating space 14 and the exhaust space 15 are formed on the upper and lower sides of the separation structure 13, the gas discharged from the pressure relief structure 22 can be prevented from being directly sprayed towards the top cover 12, so, to a certain extent, the battery 20 is prevented from causing safety problems due to thermal runaway.

In an embodiment, a gap is formed between the pressure relief structure 22 and the separation structure 13, such that when the internal pressure of the battery 20 reaches a certain value, the pressure relief structure 22 can bust open to avoid that the separation structure 13 blocks the pressure relief structure 22. The terminal assembly 23 and the separation structure 13 are spaced apart from each other.

It should be noted that a certain distance can be set between the pressure relief structure 22 and the separation structure 13 to form the gap therebetween, or, a recess can be provided on the separation structure 13 to from the gap between the pressure relief structure 22 and the separation structure 13. The specific form of the gap between the pressure relief structure 22 and the separation structure 13 is not limited in the disclosure.

In an embodiment, as shown in FIG. 6, the main body 11 further comprises a bottom plate 113 and a frame 114. The frame 114 is disposed around the bottom plate 113, an end of the frame 114 away from the bottom plate 113 forms the opening 111, the top cover 12 is connected to the frame 114, and the separation structure 13 is disposed in the frame 113, such that the battery accommodating space 14 and the exhaust space 15 are respectively formed on the upper and lower sides of the separation structure 13. When the battery pack is in normal conditions, the effective isolation to the battery 20 can be realized, and when the internal pressure of the battery accommodating space 14 reaches a certain value, pressure relief can be realized through the exhaust space 15, such that the safe use performance of the battery pack is increased.

In an embodiment, the separation structure 13 includes a fragile portion, gas inside the battery 20 can be collected into the exhaust space 15 through the fragile portion and be discharged, such that the safe use performance of the battery pack is ensured. When the internal pressure of the battery accommodating space 14 reaches a certain value, the fragile portion can be opened to communicate the battery accommodating space 15 with the exhaust space 15, such that air discharge is realized, at this time, the gas inside the exhaust space 15 can be discharged out of the battery box 10.

The fragile portion can be valve body, when the pressure inside the battery accommodating space 14 reaches a certain value, the value body can be opened to communicate the battery accommodating space 14 with the exhaust space 15. The fragile portion may be similar to an explosion-proof structure, such as an explosion-proof valve, when the pressure inside the battery accommodating space 14 reaches a certain value, the pressure can break through the explosion-proof structure, such that the battery accommodating space 14 is communicated with the exhaust space 15. The fragile portion may also be a structure having relative lower strength, such as a thin aluminum plate, when the pressure inside the battery accommodating space 14 reaches a certain value, the pressure can break through the thin aluminum plate, such that the battery accommodating space 14 is communicated with the exhaust space 15. The fragile portion may also be a notch, as low as relative lower strength is achieved. It should be noted that when the pressure inside the battery accommodating space 14 reaches a certain value, it does not specifically mean that the overall gas pressure in the battery accommodating space 14 reaches a certain value, but it may also mean that the partial air pressure in the battery accommodating space 14 reaches a certain value. For example, the pressure relief port is directly opposite to the fragile portion, so the partial gas pressure discharged from the pressure relief port of the battery is relatively higher, and thus the gas pressure can directly break through and be collected to the exhaust space 15 and then be discharged. At this time, the gas pressure at other portions of the battery accommodating space 14 may have small changes, in some embodiments, it is not excluded that the gas pressure at other portions of the battery accommodating space 14 does not change. In this embodiment, the gas pressure inside the battery accommodating space 14 reaches a certain value, and it is emphasized that the fragile portion can be broken through.

In an embodiment, the separation structure 13 includes a heat exchange channel, so as to achieve rapid heat exchange for the battery 20 disposed on the partition structure 13. The separation structure 13 can be used to realize heating or cooling for the battery 20. The heat exchange channel can be a fluid heat exchange channel, and the heat exchange channel can also be a gas heat exchange channel, so as to be used for heating or cooling the battery 20 inside the battery box 10.

It should be noted that when the battery accommodating space 14 and the exhaust space 15 are formed by the separation structure 13, the support portion 115 shown in FIG. 2 and FIG. 4 can be disposed in the battery accommodating space 14 to realize the support for the battery 20. Compared to the structure shown in FIG. 1 to FIG. 5, the existence of the separation structure 13 mainly reflects that the battery accommodating space 14 and the exhaust space 15 can be formed, and other related structures may be similar, which will not be repeated here for brevity.

An embodiment of the present disclosure further provides a vehicle, including a passenger compartment and the above-mentioned battery pack, an opening of the battery pack faces the passenger compartment.

The vehicle in an embodiment of the present disclosure includes a passenger compartment and a battery pack. The battery pack includes a battery box 10 and a battery 20, and the battery 20 is provided in the battery box 10. The battery box 10 includes a main body 11 and a top cover 12. The top cover 12 is connected to the opening 111 of the main body 11 for blocking the main body 11, and the pressure relief structure 22 and the terminal assembly 23 of the battery 20 are located on the same side of the battery body 21, and are both disposed toward the bottom surface 112 of the main body 11 opposite to the opening 111. In this manner, it is possible to prevent the gas discharged from the pressure relief structure 22 from being ejected directly toward the top cover 12, that is, to prevent the gas from being ejected directly toward the passenger compartment, thus to some extent avoiding the thermal runaway from occurring to the battery 20 and preventing safety problems. Moreover, since the pressure relief structure 22 and the terminal assembly 23 face the bottom surface 112, while ensuring a certain gap is formed between the battery body 21 and the bottom surface 112, the pressure relief structure 22 and the terminal assembly 23 may make reasonable use of the gap, thereby increasing the space utilization of the battery box 10. In the meantime, one side of the battery body 21 facing the top cover 12 may be in direct contact with the top cover 12, or other structures may be arranged between the battery body 21 and the top cover 12, so as to further improve the space utilization of the battery box 10, thereby improving the safety performance of the vehicle.

The body of the vehicle includes a passenger compartment, and the battery pack is arranged on the vehicle body. Since the opening 111 of the battery pack faces the passenger compartment, that is, the top cover 12 is arranged close to the passenger compartment, while the pressure relief structure 22 and the terminal assembly 23 of the battery 20 are far away from the passenger compartment. In this way, when thermal runaway occurs to the battery 20 and gas is discharged, it is possible to prevent the gas from being sprayed directly toward the passenger compartment, so as to protect the passengers in the passenger compartment to the greatest extent and avoid accidents.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery pack, comprising:
a battery box (10), including a main body (11) and a top cover (12), wherein the main body (11) comprises an opening (111) facing upward, and the top cover (12) is connected to the main body (11) to block the opening (111); and
a battery (20), arranged in the battery box (10), wherein the battery (20) comprises a battery body (21), a pressure relief structure (22) and a terminal assembly (23), the pressure relief structure (22) and the terminal assembly (23) are located on a same side of the battery body (21) and are disposed toward a bottom surface (112) of the main body (11) opposite to the opening (111).

2. The battery pack according to claim 1, wherein the main body (11) further comprises:
a bottom plate (113), which has the bottom surface (112);
a frame (114), which is arranged around the bottom plate (113), wherein the opening (111) is formed at one end of the frame (114) away from the bottom plate, (113 and the top cover (12) is connected to the frame (114);
wherein the pressure relief structure (22) and the bottom plate (113) are arranged at intervals, and the terminal assembly (23) and the bottom plate (113) are arranged at intervals.

3. The battery pack according to claim 2, wherein the top cover (12) seals the opening (111).

4. The battery pack according to any one of claims 1-3, wherein the top cover (12) comprises a heat exchange channel.

5. The battery pack according to claim 4, wherein the top cover (12) is in contact with the battery (20).

6. The battery pack according to claim 5, wherein the battery pack further comprises a heat conducting portion (30), and the heat conducting portion (30) is located between the top cover (12) and the battery (20), such that the top cover (12) is in contact with the battery (20) through the heat conducting portion (30).

7. The battery pack according to claim 6, wherein a thermal insulating layer (121) is provided on one side of the top cover (12) facing away from the battery (20).

8. The battery pack according to any one of claims 5-7, wherein the top cover (12) is fixedly connected to the battery (20).

9. The battery pack according to any one of claims 1-8, further comprising a temperature adjustment plate (40), wherein the temperature adjustment plate (40) is located between the top cover (12) and the battery (20).

10. The battery pack according to claim 9, wherein the temperature adjustment plate (40) is in contact with the battery (20).

11. The battery pack according to claim 10, further comprising a heat conducting portion (30), wherein the heat conducting portion (30) is located between the temperature adjustment plate (40) and the battery (20), such that the temperature adjustment plate (40) is in contact with the battery (20) through the heat conducting portion (30).

12. The battery pack according to claim 6 or 11, wherein the heat conducting portion (30) is a thermally conductive adhesive.

13. The battery pack according to any one of claims 1-12, wherein an inner side of the main body (11) is provided with a support portion (115), and one side of the battery body (21) provided with the pressure relief structure (22) and the terminal assembly (23) is provided on the support portion (115).

14. The battery pack according to claim 1-13, wherein a separation structure (13) is provided in the main body (11) to form a battery accommodating space (14) and an exhaust space (15), the battery (20) is disposed in the battery accommodating space (14), and gas in the battery accommodating space (14) is able to enter the exhaust space (15).

15. The battery pack according to claim 14, wherein the pressure relief structure (22) and the terminal assembly (23) are both arranged towards the separation structure (13).

16. The battery pack according to claim 15, wherein a gap is formed between the pressure relief structure (22) and the separation structure (13).

17. The battery pack according to claim 15, wherein the main body (11) further comprises:
a bottom plate (113),
a frame (114), arranged around the bottom plate (113), wherein an end of the frame (114) away from the bottom plate (113) forms the opening (111), the top cover (12) is connected to the frame (114), the separation structure (13) is disposed in the frame (114), such that the battery accommodating space (14) and the exhaust space (15) are respectively formed on upper and lower sides of the separation structure (13).

18. The battery pack according to any one of claims 14-17, wherein the separation structure (13) includes a fragile portion, gas discharged from the battery (20) is able to be collected into the exhaust space (15) through the fragile portion and discharged.

19. The battery pack according to any one of claims 14-17, wherein the separation structure (13) includes a heat exchange channel.

20. A vehicle, comprising a passenger compartment and the battery pack as claimed in any one of claims 1-19, wherein the opening (111) of the battery pack faces the passenger compartment.
